Europäisches Patentamt

European Patent Office

Office européen des brevets

(11) Numéro de publication : **0 447 305 A1**

# (12) DEMANDE DE BREVET EUROPEEN

(21) Numéro de dépôt : **91400649.9**

(51) Int. Cl.⁵ : **F16H 53/02, G01M 1/30**

(22) Date de dépôt : **08.03.91**

(30) Priorité : **13.03.90 FR 9003169**

(43) Date de publication de la demande :
**18.09.91 Bulletin 91/38**

(84) Etats contractants désignés :
**AT CH DE FR GB LI NL**

(71) Demandeur : **J2T VIDEO (TONNERRE) S.A.**
**Route de Tanlay**
**F-89700 Tonnerre (FR)**

(72) Inventeur : **Gancel, Etienne**
**THOMSON-CSF, SCPI, Cédex 67**
**F-92045 Paris la Défense (FR)**

(74) Mandataire : **Chaverneff, Vladimir et al**
**THOMSON-CSF SCPI**
**F-92045 PARIS LA DEFENSE CEDEX 67 (FR)**

(54) **Came-cloche pouvant tourner à grande vitesse.**

(57)   La came-cloche de l'invention est équilibrée statiquement et dynamiquement grâce à une contre-came (6) symétrique de la came (5) et à des trous (11A, 11B, 11C, ...) pratiqués dans sa couronne (2) de façon à compenser le surcroît de masse dû à la came et à la contre-came.

EP 0 447 305 A1

FIG.1

FIG.2

# CAME-CLOCHE POUVANT TOURNER A GRANDE VITESSE

La présente invention se rapporte à une came-cloche pouvant tourner à grande vitesse.

Pour usiner au tour des surfaces frontales gauches sur des pièces de révolution avec un outil de coupe se déplaçant parallèlement à l'axe de révolution de ces pièces, on utilise généralement des cames-cloches concentriques de guidage du chariot porte-outil. La surface de guidage de ces cames, formée sur la face frontale de la couronne des cames, est homothétique de celle à usiner. Cette couronne a généralement un relativement grand diamètre et présente donc une masse non négligeable qui doit être parfaitement équilibrée pour permettre un usinage précis à grande vitesse (plusieurs centaines de tours.minute).

Un exemple d'application est l'usinage de tambours inférieurs de dispositifs d'enregistrement de pistes audio et/ou vidéo obliques sur bande magnétique, dispositifs tels que des magnétoscopes, des camescopes, ou des enregistreurs DAT.

Dans ces dispositifs, le tambour inférieur comporte sur son pourtour un épaulement dont la surface frontale est hélicoïdale sur une portion d'arc de cercle et gauche sur le reste du pourtour.

L'usinage de cet épaulement doit être réalisé avec une vitesse de rotation élevée du tour, afin d'en diminuer la durée et donc son coût, ce qui est particulièrement important pour des fabrications en grande série. En outre, pour optimiser les conditions de coupe, il est souhaitable d'avoir une vitesse de rotation de la broche du tour relativement élevée (généralement supérieure à 1 000 tours/mn). Cependant, lorsque l'on augmente cette vitesse de rotation, les phénomènes dus aux déséquilibrages statique et dynamique prennent une importance considérable.

Les défauts d'équilibrage dynamique provoquent des efforts de basculement de l'axe de rotation de la broche, tandis que les défauts d'équilibrage statique tendent à faire tourner la broche de façon excentrée par rapport à l'axe principal de rotation. Ces deux défauts nuisent à la précision de l'usinage, ce qui peut être rédhibitoire dans l'application précitée pour laquelle on requiert des précisions de l'ordre du micromètre.

Les solutions actuellement utilisées pour réduire le déséquilibrage statique de la broche et de la came-cloche (perçage de trous axiaux ou radiaux dans sa jante) sont pratiquement satisfaisantes. Par contre, l'équilibrage dynamique se fait de façon plutôt empirique par ajout de masselottes sur la périphérie ou sur les faces de la came ou de la broche du tour, mais ces masselottes engendrent par elles-mêmes un déséquilibrage statique. Par conséquent, les solutions connues ne permettent pas d'obtenir à la fois un équilibrage statique et un équilibrage dynamique sensiblement parfaits. Pour diminuer les effets du déséquilibrage subsistant, on en est réduit à limiter la vitesse de rotation de la broche du tour.

La présente invention a pour objet une came-cloche du type précité dont les équilibrages statique et dynamique soient le plus parfaits possible, et qui puisse tourner à une vitesse nettement plus élevée que la vitesse permise par les solutions connues, sans nuire à la qualité de l'usinage.

La came-cloche conforme à l'invention est équilibrée statiquement et dynamiquement par construction. Elle est formée essentiellement d'un voile supportant une couronne et elle comporte sur sa couronne, à l'opposé de la surface de came, une contre-came dont la masse est, en chaque position angulaire, égale à celle de la came, et la couronne comporte des évidements compensant, sensiblement pour chaque position angulaire, le surcroît de masse dû à la came et à la contre-came.

Selon un mode de réalisation, la couronne est d'épaisseur constante, et la largeur de la came, mesurée selon sa génératrice, est égale à celle de la contre-came. Selon un mode de réalisation simple, lesdits évidements sont des trous circulaires pratiqués dans la couronne, régulièrement espacés, et de diamètres différents, fonction de la largeur moyenne de la couronne dans une portion angulaire de la zone de cet évidement.

La présente invention sera mieux comprise à la lecture de la description détaillée d'un mode de réalisation, pris à titre d'exemple non limitatif, et illustré par le dessin annexé, sur lequel :

    – la figure 1 est une vue en perspective d'une came-cloche conforme à l'invention, sans évidements de la couronne,

    – la figure 2 est une vue en perspective de la came de la figure 1, avec ses évidements, et

    – la figure 3 est une vue en coupe axiale d'un autre mode de réalisation de la came-cloche conforme à l'invention.

La came-cloche décrite ci-dessous est utilisée pour un tour d'usinage de tambours inférieurs de système de lecture de magnétoscope ou appareil similaire, mais il est bien entendu que l'invention n'est pas limitée à la réalisation de cette came-cloche, et peut être mise en oeuvre pour réaliser des cames-cloches servant à actionner d'autres sortes de dispositifs.

La came-cloche représentée sur le dessin comprend essentiellement un voile 1 et une couronne 2. L'axe de rotation de la came est référencé 3, le voile 1 lui étant perpendiculaire. La couronne 2, a dans le présent exemple, une forme de section de tube cylindrique d'épaisseur constante. Cette couronne 2 comprend trois parties fonctionnelles : une partie centrale 4 et deux parties extrêmes 5, 6. La partie centrale 4, reliée au voile 1, sert d'embase pour les parties 5 et 6. Cette partie 4 a une largeur constante (largeur mesurée selon sa génératrice). La partie 5 est la partie active de la came, c'est-à-dire que sa face frontale 7 est le chemin de came sur lequel roule le galet de guidage de l'outil de coupe. La longueur de la partie 5 (prise selon sa génératrice, parallèlement à l'axe 3) varie depuis une valeur nulle, en une position angulaire référencée 8, jusqu'à une valeur maximale en une position angulaire référencée 9. Dans le cas de l'usinage de tambours inférieurs de systèmes de lecture vidéo, cette longueur varie linéairement sur environ la moitié de la circonférence, l'autre moitié correspondant à une surface fonctionnelle de raccordement entre les extrémités de la première.

Bien entendu, dans d'autres domaines d'applications, cette variation peut suivre des lois différentes, et même présenter plusieurs minima et maxima.

La partie 6 (contre-came) constitue une des caractéristiques de l'invention. Elle sert à équilibrer en chaque position angulaire de la came le surcroît de masse dû à la partie 5. Cette partie 6 présente en chaque position angulaire de la came, une masse égale à celle de la partie 5 à la même position angulaire. Dans le cas présent, pour lequel les parties 4,5 et 6 ont la même épaisseur en toutes positions angulaires, il suffit qu'en chaque position angulaire la largeur, prise le long de la génératrice de la couronne, de la partie 6 soit égale à celle de la partie 5. Ainsi, la partie 6 est symétrique de la partie 5 par rapport à un plan perpendiculaire à l'axe 3. En particulier, pour la position angulaire 8, la largeur de la partie 6 est nulle, et elle est maximale pour la position angulaire 9.

Selon d'autres modes de réalisation, l'épaisseur de la partie 6 peut être différente de celle de la partie 5, et pour que leurs masses soient les mêmes pour la même position angulaire, leurs longueurs sont différentes.

L'adjonction de la partie 6 permet de compenser le déséquilibrage dynamique dû à une variation, en fonction de la position angulaire, de la masse de la partie 5, mais cette masse supplémentaire accentue le déséquilibrage statique de la couronne 2, le balourd de la partie 6 s'ajoutant à celui de la partie 5.

La solution, selon l'invention, consiste à pratiquer dans la couronne 2, des évidements compensant le surcroît de masse dû aux parties 5 et 6.

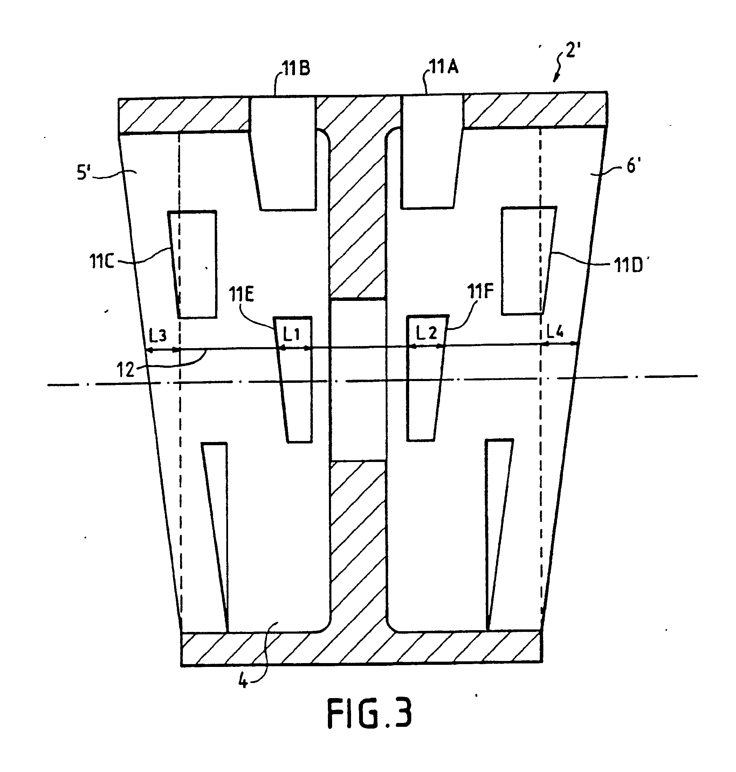

Dans le présent cas d'une couronne 2 d'épaisseur constante, il suffit qu'en chaque position angulaire de la couronne, la largeur de ces évidements soit égale à la largeur totale des parties 5 et 6. On peut ainsi pratiquer des évidements 11A,11B,11C,... dans les parties 4,5 et 6, disposés en quinconce, afin de laisser subsister de la matière, au voisinage d'évidements successifs, pour assurer une solidité suffisante de la couronne 2 (voir figure 3). Ainsi, par exemple pour la position angulaire référencée 12 sur la figure 3, la largeur totale L1+L2 des évidements 11E et 11F est égale à la somme des largeurs L3 de la partie 5' et L4 de la partie 6'.

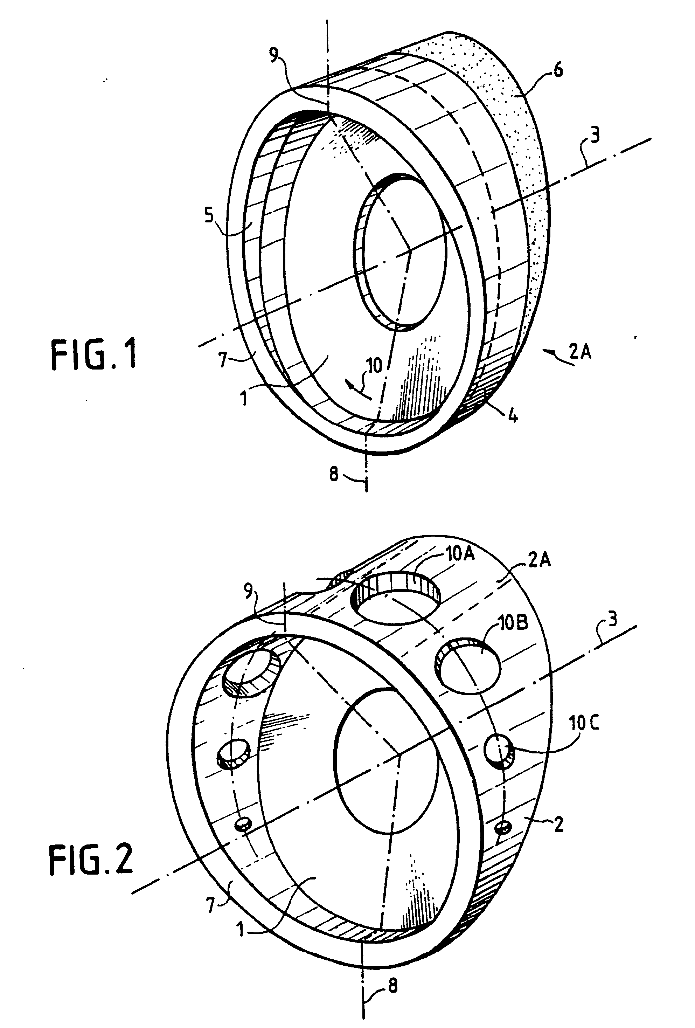

Selon un autre mode de réalisation, représenté en figure 2, pour simplifier la fabrication de la came, on pratique des évidements circulaires 10A, 10B, 10C,... Les diamètres de ces évidements sont tels que, pour une portion angulaire de couronne, la masse de matière enlevée par ces évidements soit sensiblement égale à la masse de matière supplémentaire, dans cette même portion angulaire de couronne, due aux parties 5 et 6. De préférence, les axes de ces évidements sont situés sur un même plan perpendiculaire à l'axe 3, afin d'éviter l'introduction de défauts d'équilibrage dynamique.

On prend comme origine arbitraire des angles la génératrice de position angulaire 8 (largeur nulle des parties 5 et 6 ). Pour déterminer le diamètre des évidements 10A, 10B,..., on approxime la largeur des parties 5 et 6 pour chaque portion de la couronne 2 à leur largeur "moyenne" sur cette portion. On calcule la différence entre ces largeurs moyennes et la largeur moyenne de la portion de référence centrée sur la position 8. La masse excédentaire de chaque portion étant proportionnelle à ces différences de largeur moyenne, il est facile ensuite de déterminer le diamètre des évidements à effectuer. On a délimité par deux traits interrompus une portion 2A de la couronne 2, correspondant à l'évidement 10A bien visible sur la figure 2.

La largeur totale des parties 5 et 6 est, à la position angulaire 120°, de 26,7 mm. Pour trouver l'entraxe des évidements successifs, on peut procéder de la manière approchée suivante qui s'est révélée satisfaisante. On a déterminé que la largeur minimale des "piliers " devant subsister entre deux évidements successifs était e = 4 mm, mais pour les calculs on prendra e = 5 mm. Soit D le diamètre de l'évidement le plus grand, à savoir celui devant être pratiqué dans la zone de la position angulaire 9. Soit L la largeur totale des zones 5 et 6 à la position angulaire 9.

On doit alors avoir :
$$\pi . D^2 / 4 \le L . (e + D)$$
c'est-à-dire que la surface de cet évidement le plus grand doit être inférieure ou égale à la surface d'un rectangle fictif de largeur L et dont la longueur (dans le sens circonférentiel) est égale au diamètre de l'évidement augmenté de e (en fait e/2 de chaque côté de l'évidement dans le sens circonférentiel).

Dans le cas présent, on trouve D = 38,5 mm environ, ce qui fait que le pas des évidements, que l'on choisit régulier, sera d'environ 38,5 + 5 = 43,5 mm. Le diamètre de la couronne 2 étant de 200 mm, on prend comme pas des évidements 41,89 mm, ce qui correspond à 24° de couronne, soit exactement 15 portions pour la totalité de la couronne. Avec une telle valeur de pas, on trouve que la largeur des "piliers" entre le plus grand évidement et ses voisins est de 4,39 mm, ce qui peut être considéré comme suffisant ici.

La première portion de couronne, centrée sur la position angulaire 8, a, selon l'hypothèse de départ une masse excédentaire nulle, et ne comporte donc pas d'évidement.

Dans le cas présent, la position angulaire 9 est à 120° de la position angulaire 8, c'est-à-dire à 5 x 24°, ce qui fait que le milieu de la cinquième portion après celle ne contenant pas d'évidement, coïncide avec la position angulaire 9. A cette position angulaire 9, la largeur moyenne des parties 5 et 6 est de 26,7 mm. On trouve alors que le diamètre de l'évidement centré sur la position 9 est de 38 mm, et que les diamètres des évidements voisins est de 37 mm, la largeur moyenne des parties 5 et 6 étant, pour les portions de couronnes voisines de celle comportant l'évidement le plus grand, de 24,5 mm. Les diamètres des autres évidements sont déterminés de la même façon.

Ainsi, on obtient une came équilibrée aussi bien statiquement que dynamiquement. Cette came peut donc tourner plus rapidement que les cames connues, sans aucun réglage après son montage sur un tour d'usinage. En outre, la masse de cette came peut être inférieure à celle d'une came classique de mêmes diamètre et épaisseur de couronne, ce qui diminue son inertie.

**Revendications**

1. Came-cloche pouvant tourner à grande vitesse et formée d'un voile (1) supportant une couronne (2), caractérisée par le fait qu'elle comporte sur sa couronne, à l'opposé de la surface de came (7), une contre-came (6) dont la masse est, en chaque position angulaire, égale à celle de la came, et que la couronne comporte des évidements (10A, 10B, 10C, ... ou 11A, 11B, 11C...) compensant, sensiblement pour chaque position angulaire, le surcroît de masse dû à la came (5) et à la contre-came (6).

2. Came-cloche selon la revendication 1, dont la couronne (2) est d'épaisseur constante, caractérisée par le fait que la largeur, mesurée selon sa génératrice, de la came est égale à celle de la contre-came.

3. Came-cloche selon la revendication 1 ou 2, caractérisée par le fait que les évidements sont des trous circulaires (10A, 10B, 10C,...) dont les diamètres sont déterminés à chaque fois pour compenser le surcroît de masse dû à la came et à la contre-came pour une portion angulaire de la couronne.

4. Came-cloche selon la revendication 1 ou 2, caractérisée par le fait que les évidements sont des trous allongés (11A, 11B, 11C,... ), décalés les uns par rapport aux autres dans un sens parallèle à l'axe de la came, dont la largeur en chaque position angulaire est fonction des masses de la came et de la contre-came pour cette position angulaire.

FIG.1

FIG.2

FIG.3

EP 0 447 305 A1

**RAPPORT DE RECHERCHE EUROPEENNE**

Office européen
des brevets

Numero de la demande

EP  91 40 0649

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2208759 (GEBR. HOFMANN) <br> * le document en entier * <br> --- | 1, 3 | F16H53/02 <br> G01M1/30 |
| A | FR-A-1345437 (CARL SCHENCK) <br> * le document en entier * <br> --- | 1, 3 | |
| A | DE-C-554689 (OEMETA) <br> * le document en entier * <br> --- | 1, 4 | |
| A | H. Schneider: "Auswuchttechnik" <br> 1981, VDI-Verlag GmbH, Düsseldorf <br> * page 42, alinéa 1 – page 44, alinéa 3 * <br> --- | 1 | |
| A | DE-A-3028592 (ZAKAVKAZSKIJ FILIAL) <br> ----- | | |

**DOMAINES TECHNIQUES RECHERCHES (Int. Cl.5 )**

F16H
F16F
G01M
B23Q

Le présent rapport a été établi pour toutes les revendications

| Lieu de la recherche | Date d'achèvement de la recherche | Examinateur |
|---|---|---|
| BERLIN | 28 MAI 1991 | GERTIG I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)